# EUROPÄISCHE PATENTSCHRIFT

(11) **EP 1 055 310 B1**
(45) Veröffentlichungstag und Bekanntmachung des Hinweises auf die Patenterteilung: **22.06.2005**
(21) Anmeldenummer: 99910131.4
(22) Anmeldetag: 11.02.1999
(51) Int. Cl.: H04L 12/40

(54) **SCHALTUNG ZUR BESTIMMUNG DER ÜBERTRAGUNGSRICHTUNG EINER EINRICHTUNG ZUM ANSCHLUSS EINES TEILNEHMERS AN EINE BUSLEITUNG**
CIRCUIT FOR DETERMINING THE DIRECTION OF TRANSMISSION IN A DEVICE FOR CONNECTING A SUBSCRIBER TO A BUS LINE
CIRCUIT POUR DETERMINER LE SENS DE TRANSMISSION D'UN DISPOSITIF PERMETTANT DE RELIER UN ABONNE A UNE LIGNE DE BUS

(30) Priorität: 13.02.1998 DE 29802482 U
(43) Veröffentlichungstag der Anmeldung: 29.11.2000
(73) Patentinhaber: SIEMENS AKTIENGESELLSCHAFT, 80333 München (DE)
(72) Erfinder: OCHSENREITHER, Peter, D-76768 Berg (DE)
(86) Internationale Anmeldenummer: PCT/DE1999/000394
(87) Internationale Veröffentlichungsnummer: WO 1999/041883

(56) Entgegenhaltungen:
- DE-A- 19 526 801
- GB-A- 1 572 595
- US-A- 5 623 611
- PARET D: "APPLICATIONS DU BUS CAN" ELECTRONIQUE RADIO PLANS, Nr. 541, 1. Dezember 1992 (1992-12-01), Seiten 63-69, XP000323504 ISSN: 1144-5742

## Beschreibung

Die Erfindung betrifft eine Schaltung zur Bestimmung der Übertragungsrichtung einer Einrichtung zum Anschluß eines Teilnehmers an eine Busleitung nach dem Oberbegriff des Anspruchs 1.

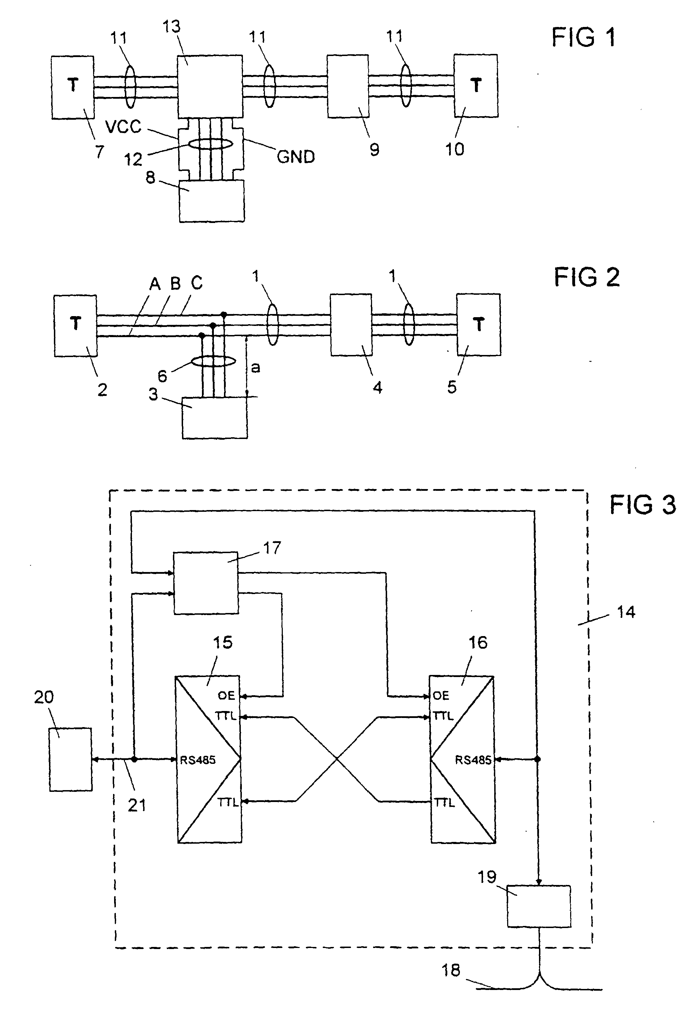

In Figur 2 sind verschiedene, allgemein bekannte Möglichkeiten zum Anschluß von Teilnehmern an eine Busleitung 1 dargestellt. In dem gezeigten Beispiel werden Daten auf der Busleitung 1 mit differentiellen Signalen übertragen. Die Busleitung 1 besitzt dazu zwei Signaladern B und A, auf welchen die Daten spannungspegelcodiert dargestellt werden, sowie einen Schirm C zur Abschirmung der Leitung gegen Störeinflüsse. Ein Beispiel einer spannungspegelcodierten Darstellung ist die RS 485-Schnittstelle, bei welcher eine Spannungsdifferenz zwischen den Adern B und A größer als 0,2 V als Digitalwert "1", eine Spannungsdifferenz von weniger als -0,2 V als Digitalwert "0" interpretiert wird. Die Datenübertragung ist bidirektional, d. h., Daten können in beiden Richtungen übertragen werden. Die Teilnehmer 2 und 5 sind jeweils an einem Ende der Busleitung 1 angeordnet. Da die Ausdehnung der Busleitung 1 mehrere hundert Meter betragen kann, ist in den Teilnehmern 2 und 5 eine Terminierung zur Unterdrückung störender Reflexionen am Leitungsende vorgesehen. Diese Terminierung kann beispielsweise aus einem 390 Ω-Widerstand zwischen einer 5 V-Versorgungsspannung und der Signalader B, einem 220 Ω-Widerstand zwischen der Signalader B und der Signalader A sowie einem 390 Ω-Widerstand zwischen der Signalader A und der Masse bestehen. Diese Terminierung entspricht im wesentlichen dem Wellenwiderstand der Busleitung 1. Die Terminierung in den Teilnehmern 2 und 5 ist jeweils durch ein T in ihrem Rechtecksymbol markiert. Durch die Bemessung der Terminierungswiderstände wird der Idle-Zustand oder Ruhezustand auf der Busleitung 1, d. h. die Spannungsdifferenz, die sich bei hochohmigen Ausgängen der Teilnehmer 2 ... 5 einstellt, auf etwa 1 V festgelegt. An den Eingängen der Teilnehmer wird dieser Idle-Zustand als der Digitalwert "1" interpretiert. Durch den Teilnehmer 4, der sich irgendwo zwischen den beiden Enden befindet, wird die Busleitung 1 ohne nennenswerte Änderungen des Wellenwiderstands hindurchgeschleift. Hier ist daher keine Terminierung erforderlich. Der Teilnehmer 3 ist mit einer Stichleitung 6 an die Busleitung 1 angeschlossen. Diese Möglichkeit ist beispielsweise vorzuziehen, wenn sich ein Teilnehmer nicht in unmittelbarer Nähe der Busleitung befindet und die Busleitung aufgrund ihrer Steifigkeit nur schwer zu diesem zu führen ist. Bei einer Datenrate bis zu 1,5 MBaud darf die Länge a der Stichleitung 6 höchstens 1,5 m betragen, da die Verzweigungsstelle am Anschlußpunkt der Stichleitung 6 an die Busleitung 1 eine Störung des Wellenwiderstands verursacht und zudem Reflexionen, die an dem ohne Terminierung an die Stichleitung 6 angeschlossenen Teilnehmer 3 entstehen, über die Stichleitung 6 in die Busleitung 1 zurücklaufen und die Datenübertragung stören. Ein derartiger Teilnehmeranschluß könnte die Übertragungssicherheit eines Bussystems verringern.

Gewünscht wird daher eine Einrichtung zum Anschluß eines Teilnehmers an eine Busleitung, mit welcher ein Teilnehmer in einfacher Weise an eine Busleitung anschließbar ist, auch wenn er sich nicht in unmittelbarer Nähe der Busleitung befindet, ohne durch den Teilnehmeranschluß die Übertragungssicherheit des Bussystems wesentlich zu verschlechtern.

Eine derartige Anschlußeinrichtung würde aber ein Signal zur Richtungssteuerung erfordern. Teilnehmer, die für bidirektionale Datenübertragung ausgelegt sind, stellen jedoch im allgemeinen kein derartiges Signal an ihrer Busschnittstelle zur Verfügung, da dies im Normalfall, wenn der Teilnehmer direkt mit seiner Busschnittstelle an das Bussystem angeschlossen wird, auch nicht benötigt wird. In der Anschlußeinrichtung muß daher eine Schaltung zur Bestimmung der Übertragungsrichtung vorgesehen werden.

Der Erfindung liegt die Aufgabe zugrunde, eine Schaltung zur Bestimmung der Übertragungsrichtung einer Einrichtung zum Anschluß eines Teilnehmers an eine Busleitung zu schaffen, die mit einem geringen Aufwand aufzubauen ist.

Zur Lösung dieser Aufgabe weist die neue Einrichtung der eingangs genannten Art die im kennzeichnenden Teil des Anspruchs 1 angegebenen Merkmale auf. Vorteilhafte Weiterbildungen sind in den Unteransprüchen beschrieben.

Die Erfindung hat den Vorteil, daß die Richtungsbestimmung im wesentlichen durch ein passives Widerstandsnetzwerk erfolgt und somit wenige aktive Bauteile benötigt werden. Die Schaltung zeichnet sich weiterhin durch einen geringen Stromverbrauch und eine kostengünstige Herstellbarkeit aus. Wegen des geringen Stromverbrauchs der Richtungsbestimmungsschaltung kann die zum Betrieb der Anschlußeinrichtung erforderliche Hilfsenergie in den meisten Fällen durch den Teilnehmer bereitgestellt werden, so daß keine zusätzliche Stromversorgung erforderlich ist.

Eine Anwendung in einer Einrichtung zum Anschluß eines Teilnehmers an eine Busleitung hat weiterhin den Vorteil, daß der Teilnehmer über eine Stichleitung an die Busleitung anschließbar ist, ohne daß die Qualität der Signale auf der Busleitung verschlechtert wird. Je nach Bedarf können längere Stichleitungen und/oder höhere Datenraten verwendet werden. Die Busleitung kann ohne nennenswerte Änderungen des Wellenwiderstands durch die Einrichtung zum Anschluß eines Teilnehmers hindurchgeschleift werden, so daß die Qualität der Signale auf der Busleitung durch den Teilnehmeranschluß höchstens unwesentlich beeinträchtigt wird. Durch den über die Stichleitung mit der neuen Anschlußeinrichtung verbundenen Teilnehmer werden keine störenden Reflexionen in die Busleitungen eingekoppelt. In vorteilhafter Weise erfordert die neue Anschlußeinrichtung keinerlei Änderungen oder Anpassungen des Teilnehmers, da keine zusätzlichen Signale zur Übertragungssteuerung benötigt werden. Insbesondere muß durch den Teilnehmer kein Richtungssteuersignal geliefert werden, das der Anschlußeinrichtung die Richtung des momentanen Datenflusses anzeigt.

Je nach Art der Signale auf der Busleitung kann die Anschlußeinrichtung auf der Busleitungsseite ohne Beeinträchtigung der Funktion der Richtungsbestimmungsschaltung eine Pegelumsetzung, eine Potentialtrennung, eine Strom/Spannungs-Wandlung oder eine optoelektrische Wandlung zum Anschluß an einen Lichtwellenleiter als Busleitung vornehmen. Die busleitungsseitige Verstärkerschaltung ist dazu in einfacher Weise an die jeweils vorhandene Aufgabe anzupassen.

Anhand der Zeichnungen, in denen Ausführungsbeispiele der Erfindung dargestellt sind, werden im folgenden die Erfindung sowie Ausgestaltungen und Vorteile näher erläutert.

Es zeigen:
- Figur 1: ein Blockschaltbild eines Bussystems mit einer neuen Anschlußeinrichtung,
- Figur 2: ein Bussystem zur Erläuterung des Standes der Technik,
- Figur 3: ein Blockschaltbild einer Anschlußeinrichtung,
- Figur 4: eine Anschlußeinrichtung für eine RS 485-Schnittstelle,
- Figur 5: ein Widerstandsnetzwerk für eine Anschlußeinrichtung nach Figur 4,
- Figur 6: ein Zeitdiagramm zur Verdeutlichung der Signalverläufe in einer Anschlußeinrichtung nach Figur 4,
- Figur 7: ein Blockschaltbild einer weiteren Anschlußeinrichtung und
- Figur 8: ein Widerstandsnetzwerk für die Anschlußeinrichtung nach Figur 7.

In einem Bussystem gemäß Figur 1, das beispielsweise der RS 485-Spezifikation genügt, sind vier Teilnehmer 7, 8, 9 und 10 an eine dreiadrige Busleitung 11 angeschlossen. Der Teilnehmer 8, der sich nicht in unmittelbarer Nähe zur Busleitung 11 befindet, ist durch eine Stichleitung 12 mit einer Anschlußeinrichtung 13 verbunden, durch welche die Busleitung 11 geschleift ist. Damit die Anschlußeinrichtung 13 ohne einen gesonderten Netzanschluß betrieben werden kann, werden zusätzlich zu den drei Adern der Stichleitung 12 Versorgungsspannungen VCC und GND vom Teilnehmer 8 zur Anschlußeinrichtung 13 geführt. Diese Versorgungsspannungen sind erforderlich, da in der Anschlußeinrichtung 13 auch aktive Bauelemente, beispielsweise eine Verstärkerschaltung zur wechselweisen Übertragung der Signale von der Busleitung 11 auf die Stichleitung 12 oder in umgekehrter Richtung, vorhanden sind. Durch die Bauelemente in der Anschlußeinrichtung 13 sind die Busleitung 11 und die Stichleitung 12 elektrisch entkoppelt, so daß Reflexionen, die am Ende der Stichleitung beim Teilnehmer 8 entstehen können, nicht über die Anschlußeinrichtung 13 in die Busleitung 11 eingekoppelt werden. Zur Vermeidung von Reflexionen an den Enden der Busleitung 11 ist in den Teilnehmern 7 und 10 jeweils eine Terminierung eingefügt. Ein derartiges Bussystem kann auch mit hohen Frequenzen, beispielsweise einer Datenrate von 12 MBaud, betrieben werden.

Zur besseren Verdeutlichung der Vorteile der Erfindung wird zunächst eine alternative Möglichkeit zur Richtungsbestimmung anhand des prinzipiellen Aufbaus einer Anschlußeinrichtung nach Figur 3 beschrieben. Die Anschlußeinrichtung 14 enthält im wesentlichen eine Verstärkerschaltung, die hier zwei bidirektionale TTL/RS 485-Umsetzer 15 und 16, beispielsweise des Typs 75ALS176B von Texas Instruments, aufweist, sowie eine Richtungsbestimmungsschaltung 17. Damit die Anschlußeinrichtung 14 an einer beliebigen Stelle einer Busleitung 18 angeordnet werden kann, ist sie mit einer wahlweise zu- oder abschaltbaren Terminierung 19 versehen. Ein Teilnehmer 20 ist über eine Stichleitung 21 mit der Anschlußeinrichtung 14 verbunden. Die Verstärkerschaltung mit den TTL/RS 485-Umsetzern 15 und 16 dient zur wechselweisen Übertragung der Signale von der Busleitung 18 auf die Stichleitung 21 bzw. von der Stichleitung 21 auf die Busleitung 18. Der busleitungsseitige Eingang des Umsetzers 16 ist hochohmig, damit die Signale auf der Busleitung 18 in einem Empfangsbetrieb nicht durch die Anschlußeinrichtung 14 beeinflußt werden. Die Ausgänge der TTL/RS 485-Umsetzer 16 und 15 an der Busleitung 18 bzw. der Stichleitung 21 sind zwischen einer aktiven und einer inaktiven Betriebsart umschaltbar. In der aktiven Betriebsart wird die jeweils angeschlossene Leitung mit den von der jeweils anderen Leitung empfangenen Signalen getrieben. In der inaktiven Betriebsart dagegen wird der jeweilige Ausgang hochohmig geschaltet. Die Einstellung der Betriebsarten erfolgt durch ein Signal an einem Eingang OE (Output Enable) der Umsetzer 15 und 16. Die hierzu erforderlichen Signale werden von der Richtungsbestimmungsschaltung 17 erzeugt. Sowohl die Signale der Busleitung 18 als auch die Signale der Stichleitung 21 sind auf die Richtungsbestimmungsschaltung 17 geführt. Diese detektiert, ob Signale von der Busleitung 18 auf die Stichleitung 21 oder von der Stichleitung 21 zur Busleitung 18 zu übertragen sind, und aktiviert durch Anlegen geeigneter Signale an die Eingänge OE der Umsetzer 15 und 16 den entsprechenden Ausgang. In dem gezeigten Beispiel genügt das Bussystem mit der Busleitung 18 sowie die Verbindung mit der Stichleitung 21 der RS 485-Spezifikation.

Im folgenden wird eine Möglichkeit der Richtungsbestimmung beschrieben:
Ausgegangen wird von einem Ruhezustand, in welchem die Ausgänge der Umsetzer 15 und 16 in die inaktive Betriebsart geschaltet sind. Durch die Richtungsbestimmungsschaltung 17 werden die Busleitung 18 und die Stichleitung 21 abgetastet und darauf überwacht, ob Daten übertragen werden sollen. Treten auf einer Seite, beispielsweise der Busleitung 18, Signale auf, die Daten repräsentieren können, so wird der Umsetzer dieser Seite, in diesem Beispiel der Umsetzer 16, in der inaktiven Betriebsart belassen und als Empfänger betrieben. Die empfangenen Signale werden intern an den Umsetzer 15 weitergeleitet, der von der Richtungsbestimmungsschaltung 17 in die aktive Betriebsart geschaltet wird. Der Umsetzer 15 sendet somit die von der Busleitung 18 empfangenen Daten über die Stichleitung 21 an den Teilnehmer 20. Werden keine Signale mehr empfangen, so werden wieder beide Seiten auf Empfang geschaltet, d. h. die Umsetzer 15 und 16 in die inaktive Betriebsart versetzt. In entsprechender Weise können Daten auch in umgekehrter Richtung übertragen werden.

Die beschriebene Möglichkeit zur Richtungsbestimmung hat den Nachteil, daß für das aktive Abtasten beider Schnittstellen der Anschlußeinrichtung viele aktive Bauelemente erforderlich sind. Dadurch hat eine Schaltung zur Durchführung der Richtungsbestimmung einen hohen Stromverbrauch und in vielen Fällen muß für die Anschlußeinrichtung eine zusätzliche Stromversorgung vorgesehen werden.

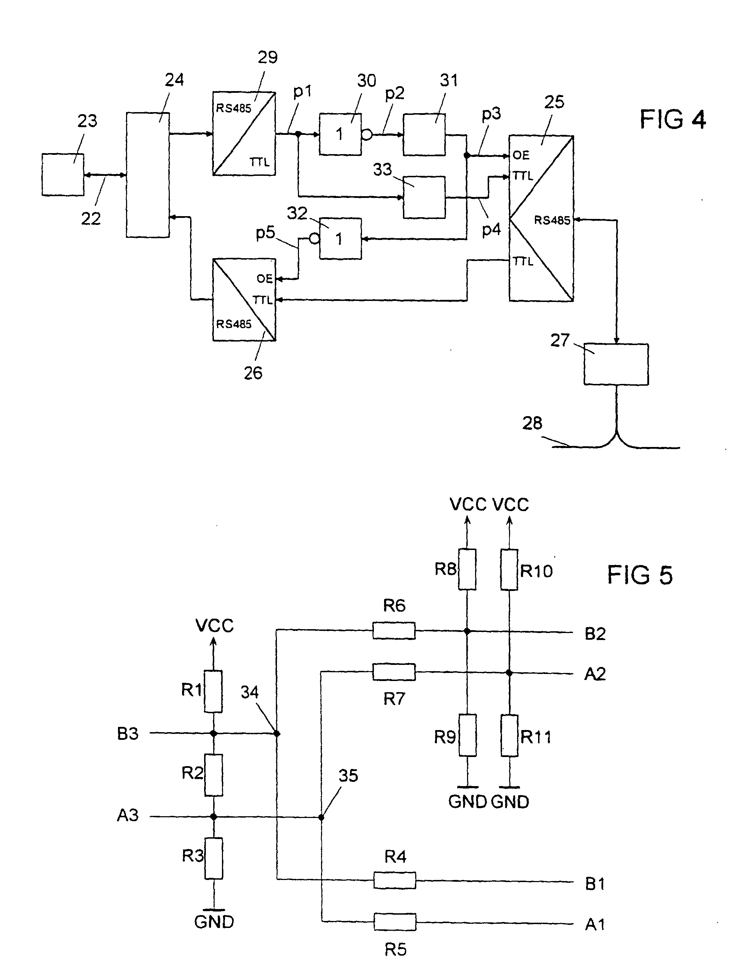

Figur 4 zeigt ein Ausführungsbeispiel der Erfindung, die eine digital spannungspegelcodierte Datenübertragung auf einer Stichleitung 22 voraussetzt. Die Stichleitung 22 stellt die Verbindung zwischen einem Teilnehmer 23 und einem passiven Teil 24 einer Richtungsbestimmungsschaltung einer Anschlußeinrichtung her. Eine Verstärkerschaltung besteht hier im wesentlichen aus einem bidirektionalen TTL/RS 485-Umsetzer 25, beispielsweise des Typs 75ALS176B von Texas Instruments, und einem unidirektionalen TTL/RS 485-Umsetzer 26, beispielsweise des Typs 75ALS180 von Texas Instruments. Der Umsetzer 25 ist, wie bereits in Figur 3 erläutert, über eine zu- oder abschaltbare Terminierung 27 mit einer Busleitung 28 verbunden. Neben dem passiven Teil 24 sind noch weitere Bestandteile der Richtungsbestimmungsschaltung ein RS 485/TTL-Umsetzer 29, der hier allgemeiner als Buffer bezeichnet wird, ein Inverter 30 und ein Verzögerungsglied 31, das negative Flanken eines Inverterausgangssignals p2 um 500 ns verzögert. Ein Ausgangssignal p3 des Verzögerungsglieds 31 ist als Richtungsbestimmungssignal auf den Eingang OE (Output Enable) des Umsetzers 25 und über einen weiteren Inverter 32 als ein invertiertes Signal p5 auf einen Eingang OE des Umsetzers 26 geführt. Ein Ausgangssignal p1 des Buffers 29 entspricht den durch den Teilnehmer 23 gesendeten Daten. Durch ein weiteres Verzögerungsglied 33, das negative und positive Flanken gleichermaßen um 100 ns verzögert, werden entsprechend verzögerte Daten als ein Signal p4 auf einen Eingang TTL des Umsetzers 25 gelegt. Dadurch wird erreicht, daß der Umsetzer 25 mit dem Signal p3 aktiv geschaltet wird, bevor das Signal p4 den Daten entspricht. Auf diese Weise können durch den Umsetzer 25 verursachte Verzerrungen kleingehalten werden. Im Sendebetrieb des Teilnehmers 23 wird der Digitalwert "0" aktiv gesendet, während der Digitalwert "1" aufgrund der Verzögerungsglieder 31 und 33 nur für die ersten etwa 400 ns in der aktiven Betriebsart des Umsetzers 25 in die Busleitung 28 eingespeist wird. Danach stellt sich auf der Busleitung 28 der Ruhezustandspegel ein, der ohnehin einem Digitalwert "1" entspricht, da der Ruhezustandspegel auf der Busleitung 28 durch die vorgeschriebene Terminierung an den Leitungsenden bei etwa 1,1 V liegt. Prinzipiell wäre somit ein Senden des Digitalwerts "1" in der aktiven Betriebsart nicht erforderlich und das Verzögerungsglied 31 könnte entfallen. Durch ein kurzzeitiges aktives Senden des Digitalwerts "1" wird jedoch ein schnelles Einstellen des entsprechenden Spannungspegels auf der Busleitung 28 erreicht.

Anhand Figur 5 wird im folgenden der in Figur 4 dargestellte passive Teil 24 der Richtungsbestimmungsschaltung erläutert. Das dargestellte Ausführungsbeispiel ist für eine spannungspegelcodierte Datenübertragung mit differentiellen Signalen ausgelegt. Für eine alternative Anwendung bei nichtdifferentiellen Signalen würden bereits die für eine Leitungsader vorgesehenen Schaltungsteile mit einer begleitenden Signalmasse und einer Anpassung der Widerstandswerte an die vordefinierten Ansprechschwellen der dann angeschlossenen aktiven Bauelemente genügen. In der in Figur 5 dargestellten Schaltung für differentielle Signalübertragung sind die Signaladern der Verbindung zwischen dem Teilnehmer 23 und dem passiven Teil 24, also die Signaladern der Stichleitung 22 in Figur 4, mit den Bezugszeichen B3 und A3 bezeichnet. Die Signaladern der Verbindung zwischen dem passiven Teil 24 und dem Buffer 29 tragen die Bezugszeichen B2 und A2, die Signaladern der Verbindung zwischen dem passiven Teil 24 und dem Umsetzer 26 tragen die Bezugszeichen B1 und A1. Die Widerstandsnetzwerke zwischen zueinander korrespondierenden Signaladern B1, B2 und B3 bzw. A1, A2 und A3 der Leitungen entsprechen jeweils im wesentlichen einer Sternschaltung. In dem einen Netzwerk ist ein Längswiderstand R6 mit 220 Ω zwischen einen Sternpunkt 34 und die Signalader B2, die auf den Buffer 29 (Figur 4) geführt ist, geschaltet. Weiterhin befindet sich ein Längswiderstand R4 mit 220 Ω zwischen dem Sternpunkt 34 und der Signalader B1. Mit der Signalader B3 ist der Sternpunkt 34 direkt verbunden. Ein Klemmwiderstand R8 mit 390 Ω gegen die Versorgungsspannung VCC sowie ein Klemmwiderstand R9 mit 560 Ω gegen Masse GND sind an der Signalader B2 angeschlossen. Ebenso befinden sich Klemmwiderstände R1 mit 1 kΩ gegen VCC und Klemmwiderstände R2 und R3 mit 475 Ω bzw. 1 kΩ gegen Masse GND in einer Reihenschaltung an der Signalader B3. Ein Sternpunkt 35 eines weiteren Widerstandsnetzwerks für die Signaladern A1, A2 und A3 ist über einen Längswiderstand R7 mit 220 Ω mit der Signalader A2, über einen Längswiderstand R5 mit 220 Ω mit der Signalader A1 und direkt mit der Signalader A3 verbunden. An der Signalader A2 sind ein Klemmwiderstand R10 mit 560 Ω gegen die Versorgungsspannung VCC und ein Klemmwiderstand R11 mit 270 Ω gegen Masse GND vorgesehen. Für die Signalader A3 werden als Klemmwiderstände wiederum der Widerstand R3 gegen Masse GND und eine aus den Widerständen R1 und R2 gebildete Reihenschaltung gegen VCC verwendet. Die Widerstände R1 ... R11 der Widerstandsnetzwerke sind derart dimensioniert, daß eine vom Ausgang des Umsetzers 26 (Figur 4) über die Signaladern B1 und A1 auf die Widerstandsnetzwerke gegebene, einem Wechsel eines Digitalwerts entsprechende Pegeländerung den Pegel auf den Signaladern B3 und A3, also auf der Stichleitung 22 (Figur 4), derart verändert, daß der Wechsel des Digitalwerts an einem angeschlossenen Eingang detektierbar ist, den Pegel auf den Signaladern B2 und A2, also am Eingang des Buffers 29 (Figur 4), jedoch in nur geringerem Maße verändert, so daß an dem Buffer 29 der Wechsel des Digitalwerts nicht detektierbar ist. Weiterhin wird durch die Dimensionierung der Widerstände R1 ... R11 erreicht, daß eine von der Stichleitung 22 (Figur 4) über die Signaladern B3 und A3 auf die Widerstandsnetzwerke gegebene, einem Wechsel des Digitalwerts entsprechende Pegeländerung den Pegel am Eingang des Buffers 29 (Figur 4), also auf den Signaladern B2 und A2, derart verändert, daß der Wechsel des Digitalwerts durch den Buffer 29 detektierbar ist. Diese Wirkungen sollen anhand der folgenden Aufstellung von Spannungswerten verdeutlicht werden. Darin wird beispielsweise mit U_{B1A1} ein Spannungswert zwischen den Signaladern B1 und A1 bezeichnet. Mit WENN/DANN-Aussagen wird verkürzt der Sachverhalt wiedergegeben, daß sich, wenn eine im Bedingungsteil genannte Spannung zwischen zwei Signaladern B1 und A1 oder B3 und A3 in die Netzwerke eingespeist wird, eine im Folgerungsteil angegebene Spannung zwischen den dort genannten Signaladern einstellt. Für die in Figur 5 dargestellte Schaltung können die folgenden WENN/DANN-Aussagen angegeben werden:
WENN U_{B3A3} ~ 2,5 V, DANN U_{B2A2} ~ 1, 9 V,
WENN U_{B3A3} ~ -2,5 V, DANN U_{B2A2} ~ -0, 5 V,
WENN U_{B1A1} ~ 2, 5 V, DANN U_{B3A3} ~ 1, 6 V und U_{B2A2} ~ 1, 5 V,
WENN U_{B1A1} ~ -2,5 V, DANN U_{B3A3} ~ -0,3 V und U_{B2A2} ~ 0,6 V.
Als Ruhezustandspegel, d. h. wenn von keinem der Signaladernpaare eine Spannung in die Netzwerke eingespeist wird, stellen sich die Spannungen U_{B2A2} ~ 1,2 V und U_{B3A3} ~ 1,1 V ein.

Somit wird ein an den Signaladern B1 und A1 angelegter Digitalwert zu den Signaladern B3, A3 übertragen, nicht jedoch zu den Signaladern B2, A2. Andererseits wird ein an den Signaladern B3, A3 angelegter Digitalwert zu den Signaladern B2, A2 übertragen. Anhand der mit dem Buffer 29 detektierten Low-Phasen der Spannung U_{B2A2} ist es daher möglich, ein Richtungsbestimmungssignal zu erzeugen. Diese Art der Richtungsbestimmung zeichnet sich durch einen geringen Aufwand und einen geringen Stromverbrauch der Bauelemente aus, so daß die Anschlußeinrichtung ohne weiteres durch von einem angeschlossenen Teilnehmer abgegebene Versorgungsspannungen mit der erforderlichen Betriebsenergie versorgt werden kann.

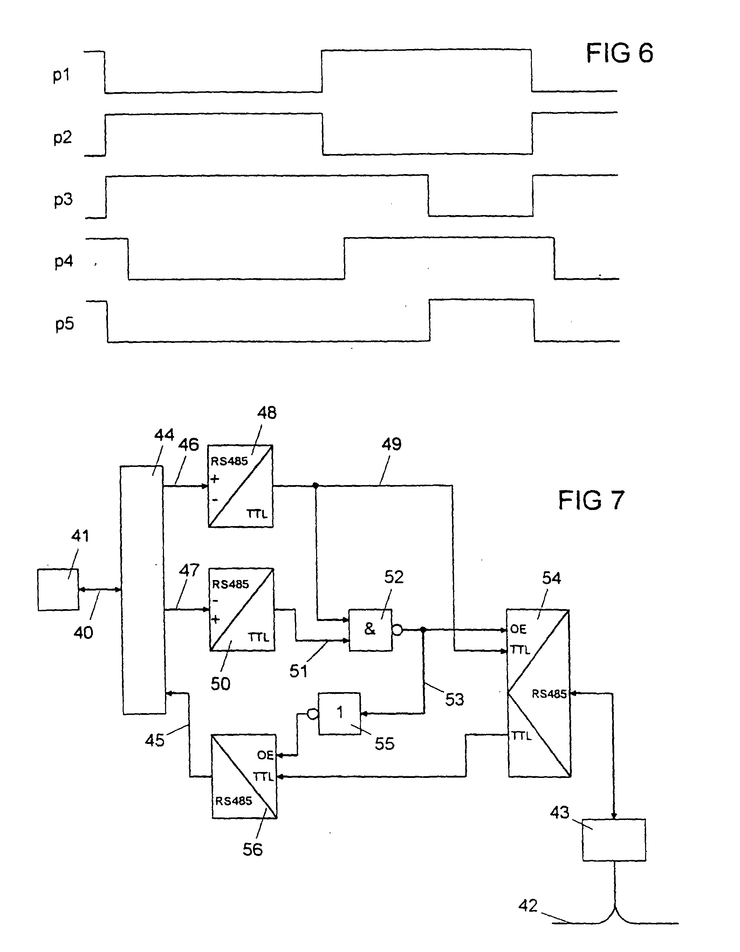

Die Funktionsweise der in Figur 4 dargestellten Schaltung wird anhand der Zeitdiagramme in Figur 6 weiter verdeutlicht. Gezeigt wird das Aussenden aufeinanderfolgender Digitalwerte "0", "1" und "0" durch den Teilnehmer 23, ausgehend von einem Ruhezustand. Diese Digitalwerte werden entsprechend als Spannungspegel des Signals p1 vom Buffer 29 ausgegeben. Das Signal p2 wird aus dem Signal p1 durch den Inverter 30 gewonnen und entspricht infolgedessen dem invertierten Signal p1. Mit dem Verzögerungsglied 31 werden negative Flanken des Signals p2 um 500 ns verzögert und somit das Signal p3 erzeugt. Mit dem Signal p3 wird der Umsetzer 25 in die aktive Betriebsart und über den Inverter 32 der Umsetzer 26 in die inaktive Betriebsart geschaltet, wie es bei einem Senden des Teilnehmers 23 auf die Busleitung 28 der Fall sein muß. Durch das Verzögerungsglied 33 wird das Signal p1 um 100 ns verzögert, so daß das Signal p4 die verzögerten Sendedaten wiedergibt. Damit ist sichergestellt, daß die Daten mit einer höchstens geringen Verzerrung auf die Busleitung 28 gegeben werden. Der Inverter 32 erzeugt das Signal p5, das den Umsetzer 26 im wesentlichen während des Sendevorgangs in die inaktive Betriebsart schaltet.

In der entgegengesetzten Übertragungsrichtung, also wenn Daten von der Busleitung 28 zum Teilnehmer 23 zu übertragen sind, wird durch den passiven Teil 24 der Richtungsbestimmungsschaltung verhindert, daß der Buffer 29 den Digitalwert "0" detektiert. Infolgedessen ist während einer Datenübertragung in dieser Richtung der Umsetzer 25 in die inaktive Betriebsart und der Umsetzer 26 in die aktive Betriebsart geschaltet.

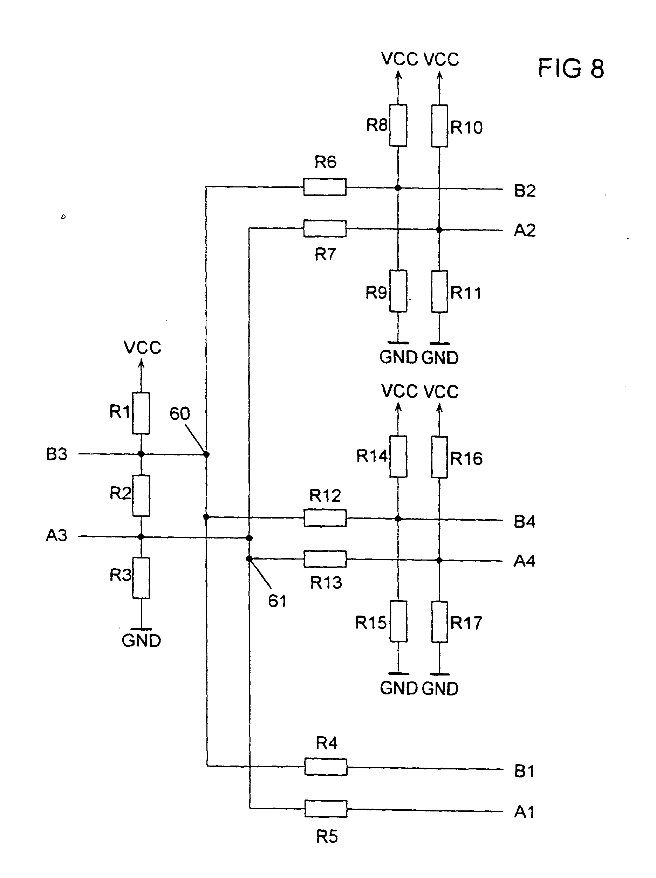

Die Figuren 7 und 8 zeigen ein weiteres Ausführungsbeispiel einer Einrichtung zum Anschluß eines Teilnehmers an eine Busleitung. Durch eine Stichleitung 40 ist ein Teilnehmer 41 mit der Anschlußeinrichtung verbunden. Die Anschlußeinrichtung selbst ist wiederum über eine je nach Einbauort an einer Busleitung 42 zuschaltbare Terminierung 43 an die Busleitung 42 angeschlossen. Ein passiver Teil 44 einer Richtungsbestimmungsschaltung entspricht in Aufbau und Funktion im wesentlichen der Schaltung nach Figur 5 und ist in Figur 8 detailliert dargestellt. Gleiche Widerstände sind mit gleichen Bezugszeichen versehen. Um ausgehend von dem passiven Teil nach Figur 5 das passive Teil nach Figur 8 zu erhalten, werden Signaladern B4 und A4 einer weiteren Leitung über Längswiderstände R12 bzw. R13 mit jeweils 180 Ω auf Sternpunkte 60 bzw. 61 der Widerstandsnetzwerke geführt, die den Sternpunkten 34 bzw. 35 in Figur 5 entsprechen. Die Signalader B4 wird zusätzlich über einen Klemmwiderstand R14 mit 560 Ω gegen die Versorgungsspannung VCC und über einen Klemmwiderstand R15 mit 270 Ω gegen Masse GND geschaltet. Auch an der Signalader A3 ist ein Klemmwiderstand R16 mit 270 Ω gegen die Versorgungsspannung VCC und ein Klemmwiderstand R17 mit 560 Ω gegen Masse GND angebracht. In Figur 7 sind die Signaladern B1 und A1 als eine Leitung 45, die Signaladern B2 und A2 als eine Leitung 46, die Signaladern B3 und A3 als die Leitung 40 sowie die Signaladern B4 und A4 als eine Leitung 47 eingezeichnet. Die Leitung 46 ist auf einen RS 485/TTL-Umsetzer 48 geführt, der zur Detektion von dem Digitalwert "0" entsprechenden Spannungswerten dient. Bei Detektion des Digitalwerts "0" wird auf einer Leitung 49 ein Low-Pegel ausgegeben. Die Leitung 47 ist mit umgekehrter Polarität der Signaladern an einen RS 485/TTL-Umsetzer 50 angeschlossen, der zur Detektion von dem Digitalwert "1" entsprechenden Spannungspegeln vorgesehen ist. Die Umkehrung der Anschlußpolarität ist in den Symbolen der Umsetzer 48 und 50 durch vertauschte "+"- und "-"-Zeichen an den Eingängen angedeutet. Aufgrund der gewählten Anschlußpolarität gibt der Umsetzer 50 bei Detektion des Digitalwerts "1" einen Low-Pegel auf eine Leitung 51 aus. Durch ein Verknüpfungsglied 52 nach Art eines NAND-Gatters werden die Signale auf den Leitungen 49 und 51 zu einem Signal 53 (Driver Enable) verknüpft, das auf einen Eingang OE eines bidirektionalen TTL/RS 485-Umsetzers 54 und über einen Inverter 55 auf einen Eingang OE eines unidirektionalen TTL/RS 485-Umsetzers 56 geführt ist. Anhand von WENN/DANN-Aussagen wird im folgenden wiederum die Funktion des in Figur 8 detailliert dargestellten passiven Teils 44 der Richtungsbestimmungsschaltung erläutert. Diese lauten:
WENN U_{B1A1} ~ 2, 5 V, DANN U_{B2A2} ~ 1,1 V und U_{B3A3} ~ 1,0 V und
U_{B4A4} ~ -0,4 V,
WENN U_{B1A1} ~ - 2, 5 V, DANN U_{B2A2} ~ 0,4 V und U_{B3A3} ~ -0,5 V und
U_{B4A4} ~ -1,1 V,
WENN U_{B3A3} ~ 2, 5 V, DANN U_{B2A2} ~ 1, 9 V und U_{B4A4} ~ 0, 4 V,
WENN U_{B3A3} ~ -2, 5 V, DANN U_{B2A2} ~ -0,5 V und U_{B4A4} ~ -2,1 V.
Im Ruhezustand, d. h. wenn alle Ausgänge der aktiven Bauelemente, die an den passiven Teil des Richtungsbestimmungsnetzwerks angeschlossen sind, hochohmig oder in die inaktive Betriebsart geschaltet sind, stellen sich die folgenden Spannungen ein:
U_{B2A2} ~ 0,8 V,
U_{B3A3} ~ 0,3 V und
U_{B4A4} ~ -0,7 V.

Solange der Teilnehmer 41 keine Daten auf die Stichleitung 40 sendet, hat das Signal 53 (Driver Enable) einen Low-Pegel, durch welchen der Umsetzer 54 in die inaktive Betriebsart und der Umsetzer 56 in die aktive Betriebsart geschaltet wird, so daß der Teilnehmer 41 Daten von der Busleitung 42 empfangen kann. Sobald der Teilnehmer 41 jedoch in den Sendebetrieb übergeht, wird entweder durch den Buffer 48 oder durch den Buffer 50 ein Digitalwert "0" bzw. ein Digitalwert "1" detektiert, ein High-Pegel des Signals 53 erzeugt und die Übertragungsrichtung umgeschaltet, so daß der Teilnehmer 41 nun Daten auf die Busleitung 42 senden kann.

## Patentansprüche

1. Schaltung zur Bestimmung der Übertragungsrichtung einer Einrichtung zum Anschluß eines Teilnehmers an eine Busleitung zur bidirektionalen Datenübertragung, **dadurch gekennzeichnet,**
**daß** der Teilnehmer (20) über eine Stichleitung (21) an die Schaltung (14) anschließbar ist,
**daß** eine Verstärkerschaltung (15, 16) zur Übertragung der Signale von der Busleitung (18) auf die Stichleitung (21) vorhanden ist,
**daß** die Datenübertragung auf der Stichleitung (22) digital spannungspegelcodiert mit vordefinierten Ansprechschwellen zur Detektion der Digitalwerte ist,
**daß** ein Widerstandsnetzwerk (R1 ... R4, R6, R8, R9) und ein Buffer (29) zur Erzeugung eines Bestimmungssignals (p1) vorhanden ist, wobei das Widerstandsnetzwerk im wesentlichen einer Sternschaltung entspricht mit einem Längswiderstand (R6) zwischen dem Sternpunkt (34) und dem Eingang des Buffers (29), mit einem Längswiderstand zwischen dem Sternpunkt (34) und dem stichleitungsseitigen Ausgang der Verstärkerschaltung (25, 26) und mit einer Verbindung des Sternpunkts (34) mit der Stichleitung (22), wobei das Widerstandsnetzwerk weiterhin am Eingang des Buffers (29) und an der Stichleitung (22) Klemmwiderstände (R1, R2, R3, R8, R9) gegen die Versorgungsspannungen (VCC, GND) aufweist und wobei die Widerstände des Widerstandsnetzwerks derart dimensioniert sind, daß eine vom Ausgang der Verstärkerschaltung (25, 26) auf das Widerstandsnetzwerk gegebene, einem Wechsel eines Digitalwerts entsprechende Pegeländerung den Pegel auf der Stichleitung (22) derart verändert, daß der Wechsel des Digitalwerts an einem angeschlossenen Eingang eines Teilnehmers (23) detektierbar ist, den Pegel am Eingang des Buffers (29) jedoch in nur geringerem Maße verändert, so daß an dem Buffer (29) der Wechsel des Digitalwerts nicht detektierbar ist, und
**daß** eine von der Stichleitung (22) auf das Widerstandsnetzwerk gegebene, einem Wechsel des Digitalwerts entsprechende Pegeländerung den Pegel am Eingang des Buffers (29) derart verändert, daß der Wechsel des Digitalwerts durch den Buffer (29) detektierbar ist.

2. Schaltung nach Anspruch 1, **dadurch gekennzeichnet, daß** die Datenübertragung auf der Stichleitung (22) differentiell ist und Leitungen zur differentiellen Übertragung jeweils als Adernpaar ausgebildet sind,
daß die Richtungsbestimmungsschaltung für jede Ader (B, A) ein Widerstandsnetzwerk enthält, wobei an der Stichleitung (22) die Klemmwiderstände (R1, R2, R3) gegen die Versorgungsleitungen (VCC, GND) entsprechend einer Spannungsteilerschaltung angeordnet sind, mit einem ersten Widerstand (R1) zwischen der positiven Versorgungsspannung (VCC) und der ersten Ader (B3), einem zweiten Widerstand (R2) zwischen der ersten Ader (B3) und der zweiten Ader (A3) und einem dritten Widerstand (R3) zwischen der zweiten Ader (A3) und der negativen Versorgungsspannung (GND) oder Masse.

3. Schaltung nach Anspruch 2, **dadurch gekennzeichnet, daß** die Richtungsbestimmungsschaltung für jeden Digitalwert einen Buffer (48, 50) zur Erzeugung eines Bestimmungssignals (49, 51) enthält, wobei die Widerstandsnetzwerke für jede Leitungsader (B, A) jeweils mit einem Längswiderstand (R6, R7, R12, R13) zwischen den Sternpunkten (60, 61) und den Eingängen der Buffer (48, 50) und an den Buffereingängen mit Klemmwiderständen (R8 ... R11, R14 ... R17) gegen die Versorgungsspannungen (VCC, GND) versehen sind, und
daß ein Verknüpfungsglied (52) vorhanden ist, durch welches aus den Bestimmungssignalen der Buffer (48, 50) ein Richtungsbestimmungssignal erzeugbar ist.

## Claims

1. Circuit for determining the direction of transmission in a device for connecting a subscriber to a bus line for bidirectional data transmission, **characterized in that** the subscriber (20) can be connected to the circuit (14) via a branch line (21), that an amplifier circuit (15, 16) exists for transmitting the signals from the bus line (18) to the branch line (21),
**in that** the data transmission on the branch line (22) is digitally voltage-level-coded with predefined response thresholds for detecting the digital values,
**in that** a resistance network (R1 ... R4, R6, R8, R9) and a buffer (29) are present for generating a determining signal (p1), the resistor network essentially corresponding to a star circuit with a series resistor (R6) between the star point (34) and the input of the buffer (29), with a series resistor between the star point (34) and the output of the amplifier circuit (25, 26) at the branch line side and with a connection of the star point (34) to the branch line (22), the resistance network also having clamping resistors (R1, R2, R3, R8, R9) to the supply voltages (VCC, GND) at the input of the buffer (29) and at the branch line (22) and the resistors of the resistance network being dimensioned in such a manner that a level change corresponding to a change in a digital value, applied from the output of the amplifier circuit (25, 26) to the resistance network, changes the level on the branch line (22) in such a manner that the change in the digital value can be detected at a connected input of a subscriber (23) but only changes the level at the input of the buffer (29) to a lesser extent so that the change in the digital value cannot be detected at the buffer (29), and
**in that** a level change corresponding to a change in the digital value, applied from the branch line (22) to the resistance network, changes the level of the input of the buffer (29) in such a manner that the change in the digital value can be detected by the buffer (29).

2. Circuit according to Claim 1, **characterized in that** the data transmission on the branch line (22) is differential and lines for differential transmission are in each case constructed as a pair of wires,
**in that** the direction determining circuit for each wire (B, A) contains a resistance network, the clamping resistors (R1, R2, R3) to supply lines (VCC, GND) being arranged at the branch line (22) in accordance with a voltage divider circuit, with a first resistor (R1) between the positive supply voltage (VCC) and the first wire (B3), a second resistor (R2) between the first wire (B3) and the second wire (A3) and a third resistor (R3) between the second wire (A3) and the negative supply voltage (GND) or earth.

3. Circuit according to Claim 2, **characterized in that** the direction determining circuit contains for each digital value a buffer (48, 50) for generating a determining signal (49, 51), the resistance networks for each line wire (B, A) in each case being provided with a series resistor (R6, R7, R12, R13) between the star points (60, 61) and the inputs of the buffers (48, 50) and at the buffer inputs with clamping resistors (R8 ... R11, R14 ... R17) to the supply voltages (VCC, GND), and **in that** a logic element (52) is present by means of which a direction determining signal can be generated from the determining signals of the buffers (48, 50).

## Revendications

1. Circuit pour déterminer le sens de transmission d'une installation destinée à raccorder un terminal à une ligne de bus pour transmettre des données dans deux sens, **caractérisé en ce que**
- le terminal (20) peut être raccordé au circuit (14) par l'intermédiaire d'une ligne de branchement (21),
- il y a un circuit d'amplification (15, 16) pour transmettre les signaux depuis la ligne de bus (18) jusque sur la ligne de branchement (21),
- la transmission des données sur la ligne de branchement (22) est codée numériquement en niveau de tension d'après des seuils prédéfinis de déclenchement pour détecter les valeurs numériques,
- il y a un réseau de résistances (R1 à R4, R6, R8, R9) et un tampon (29) pour produire un signal de détermination (p1), lequel réseau de résistances correspond sensiblement à un circuit en étoile comportant
- une résistance en série (R6) entre le point neutre (34) et l'entrée du tampon (29),
- une résistance en série entre le point neutre (34) et la sortie - côté ligne de branchement - du circuit d'amplification (25, 26) et
- une liaison du point neutre (34) avec la ligne de branchement (22), le réseau de résistances présentant en outre, à l'entrée du tampon (29) et sur la ligne de branchement (22), des résistances de blocage (R1, R2, R3, R8, R9) vers les tensions d'alimentation (VCC, GND) et
les résistances du réseau de résistances sont dimensionnées de telle manière qu'une modification du niveau qui est produite par la sortie du circuit d'amplification (25, 26) sur le réseau de résistances et qui correspond à un changement d'une valeur numérique modifie le niveau sur la ligne de branchement (22) de telle manière que le changement de la valeur numérique peut être détecté à une entrée raccordée d'un terminal (23) mais qu'elle ne modifie que dans une mesure limitée le niveau à l'entrée du tampon (29), de sorte que le changement de la valeur numérique ne peut pas être détecté sur le tampon (29) et
- une modification du niveau qui est produite par la ligne de branchement (22) sur le réseau de résistances et qui correspond à un changement de la valeur numérique modifie le niveau à l'entrée du tampon (29) de telle manière que le changement de la valeur numérique peut être détecté par le tampon (29).

2. Circuit selon la revendication 1, **caractérisé en ce que**
les données sont transmises sous forme différentielle sur la ligne de branchement (22) et chacune des lignes pour transmettre les données sous forme différentielle est une paire de conducteurs,
le circuit pour déterminer le sens de transmission contient pour chaque conducteur (B, A) un réseau de résistances, les résistances de blocage (R1, R2, R3) vers les lignes d'alimentation (VCC, GND) étant disposées sur la ligne de branchement (22) de façon analogue à un circuit de répartition de tension, comportant
- une première résistance (R1) entre la tension d'alimentation (VCC) positive et le premier conducteur (B3),
- une deuxième résistance (R2) entre le premier conducteur (B3) et le deuxième conducteur (A3) et
- une troisième résistance (R3) entre le deuxième conducteur (A3) et la tension d'alimentation (GND) négative ou la masse.

3. Circuit selon la revendication 2, **caractérisé en ce que**
le circuit destiné à déterminer le sens pour chaque valeur numérique comporte un tampon (48, 50) destiné à produire un signal de détermination (49, 51), pour chaque conducteur de ligne (B, A), chacun des réseaux de résistances étant muni d'une résistance en série (R6, 57, R12, R13) entre les points neutres (60, 61) et les entrées des tampons (48, 50) et étant muni, aux entrées de tampon, de résistances de blocage (R8 à R11, R14 à R17) vers les tensions d'alimentation (VCC, GND) et
- il y a un élément logique (52) qui permet de produire à partir des signaux de détermination des tampons (48, 50) un signal pour déterminer le sens.
